# EUROPEAN PATENT APPLICATION

(11) **EP 3 862 285 A1**
(43) Date of publication of application: **11.08.2021**
(21) Application number: 19869879.7
(22) Date of filing: 03.10.2019
(51) Int. Cl.: B65D 30/06, A45C 3/04, D03D 1/04

(54) **BIODEGRADABLE PACKAGING FOR FOOD AND METHOD OF OBTAINMENT**

(30) Priority: 03.10.2018 ES 201831506 U
(71) Applicant: Gold Fiber Europe, S.L., 46980 Paterna Valencia (ES)
(72) Inventor: VALLCANERA VILANOVA, María Concepción, 46980 Paterna (Valencia) (ES)
(74) Representative: Ungria López, Javier
(86) International application number: PCT/ES2019/070665
(87) International publication number: WO 2020/070366

(57) **Abstract**

The present invention encompasses biodegradable packaging for food having a container body made from a sheet that closes on itself, creating an inner compartment and an opening in the manner of a bag, said sheet being made from natural plant fibre mesh, lined and coated with starch, selected from the group composed of cotton, linen, hemp and jute, or combinations thereof, and more preferably of jute, said mesh having orifices or holes of a size comprised between 2 mm and 15 mm, and more preferably between 5 mm and 15 mm. Said mesh may be dyed or coloured in any colour and may include various additional components: textile strap to include legends, trademarks or indications on the product contained therein, reinforcement bands on its sides, handle, etc. The invention also relates to the method for obtaining the packaging, which comprises a starch impregnation step to reinforce the resistance of the mesh and additionally a dyeing phase.

## Description

### Object and technical field of the invention

The invention is comprised in the food industry and relates to a bag-type packaging for food, primarily made from biodegradable and, therefore, disposable materials.

It can also be reused several times and at least some of its components are readily recyclable, especially if materials that are not entirely biodegradable are optionally used.

### Background of the invention

There is a strong trend today to reduce the consumption and production of plastic materials, primarily by means of replacing such materials with packaging manufactured from environmentally compatible materials and laws which strengthen said reduced consumption of plastic materials.

Materials of plant origin commonly used in the manufacture of fabrics and the like which have started to be used in the manufacture of packaging, such as sacks, are known. Among these materials are cotton, linen, jute, hemp, coconut yarn, etc.

Thus, in the case of jute, the main destination for the fibre extracted from this plant is, at present, the manufacture of packaging sacks. It is also frequently used to manufacture cords. It is used less for fabrics, due to the treatment it requires, given its high lignin content and the competition put up by synthetic fibres, although jute has the advantage of being degradable and, therefore, not causing ecological damage.

Jute and other degradable textile materials are already used for sacks or bags, but in the form of fabric, which are virtually opaque to the content inside them and untreated, reinforcing their resistance against weight or deterioration.

In view of the difficulties detected in the field of the art for finding and working with materials replacing plastic, the present invention, which is a biodegradable, disposable packaging presented as an alternative to the commonly used plastic packaging for food, has been developed.

### General description of the invention

The present invention relates to a biodegradable packaging for food, having a food container body made from a sheet that closes on itself, creating an inner compartment and an opening in the manner of a bag, said sheet being made from a mesh (netting) of natural plant fibre, lined with starch, selected from the group composed of cotton, linen, hemp and jute, as well as any of the combinations thereof, and wherein said mesh has orifices or holes of a size comprised between 2 mm and 15 mm, and more preferably between 5 mm and 15 mm.

The holes or orifices of the mesh have, regardless of their size, a preferred tolerance index of 1 %-5 %, and even more preferably of 2 %-3 %. Said holes or orifices have a shape which can be selected from the group composed of: square (quadrilateral shape), rectangular, rhomboidal and circular, among others. More preferably, the holes have a quadrilateral shape, forming a lattice. In a particular embodiment, the size of the holes or quadrilaterals formed by the plant fibre mesh is 7 mm x 7 mm, and in another embodiment it is 10 mm x 10 mm. The size of the hole of the mesh is significantly important as it is what allows good mechanical resistance of the mesh to be achieved without sacrificing being able to see the product inside it.

In the scope of protection of the present specification, it must be considered that any given range of values also contains its two upper and lower limits as part of the invention.

The consistency and mechanical resistance of the plant fibre yarn mesh configuring the packaging is achieved as a result of the treatment with starch applied to the mesh, which coats the fibre yarns. This starch impregnation treatment and subsequent drying reduces the malleability of plant fibre, especially jute, making it more rigid. This is important because when working with such large square or hole measurements compared with the very small measurements these meshes usually have, for example in sacks, the final finishing of the packaging would be too soft and have little consistency for holding certain products. The starch is preferably corn starch, a biodegradable food component, without prejudice to using other starches producing the same effect. In a particular manner, in the most preferred embodiment, 100 % natural, food-grade corn powder is used as starch. For treating the mesh, a solution of said corn powder in water, at a concentration of 2 %-12 %, is used, that is, between 2 kg and 12 kg are used for every 100 litres of water, preferably filtered water, to prepare the solution with which the mesh is to be coated or lined.

Also preferably, the packaging can be dyed or coloured, primarily because the food container body, which is the sheet made from natural plant fibre mesh lined with starch, is dyed or coloured in any colour. In the best-case scenario, it is dyed with a natural, ecological and environmentally friendly dye, although any dye suitable for contact with food can generally be used.

The mesh is preferably formed by plant fibre yarn that is braided to form the lattice or mesh, although in other embodiments said fibre yarn can be knotted, adhered or joined together in any other way or technique known in the manufacture of fabrics.

Natural plant fibre mesh can have multiple configurations depending on how it is sewn and on the basis weight desired to be applied to same. Thus, in a preferred embodiment, the mesh can be composed of a horizontal yarn (with respect to the length of the packaging) braided with two yarns perpendicular to the horizontal yarn (that is, vertical with respect to the width of the packaging), forming a lattice or netting with holes homogeneously distributed in the mesh. In another particular embodiment, the mesh can be composed of a single horizontal yarn braided with a single yarn perpendicular (vertical) with respect to the horizontal yarn, forming said lattice.

In the most preferred embodiment, the natural plant fibre used is jute; even more preferably, it is non-laminated jute (that is, it has not been laminated or associated with any other material); and in the most preferred embodiment, non-laminated jute having a width of 80 cm is used (that is, a jute yarn cloth with a width of 80 cm is used; the jute yarn cloth used in the packaging is generally between 60 cm and 120 cm wide). Preferably, the basis weight of the natural fibre (preferably jute yarn) is comprised between 80 and 300 gsm, preferably between 80 and 150 gsm, more preferably between 90 and 125 gsm, and even much more preferably between 97 and 105 gsm.

The biodegradable packaging for food herein described additionally comprises at least one textile or non-woven material band or sheet of natural fibre or manufactured in any material compatible with the food it contacts, which is adhered to the outer surface of the mesh, to include legends, trademarks or indications on the product contained therein. These textile bands are preferably sewn or adhered to the mesh. The packaging may also comprise other textile or non-woven material bands located on its perimeter (on both sides of the sheet made from mesh which folds over itself, forming the bag), in the manner of a reinforcement and closure in order to improve the appearance and consistency of the packaging. This band may have such an extension that it protrudes from the container body of the packaging forming the mesh to form a handle of the packaging (see figures). The reinforcement bands of the packaging can be on the outside of the packaging, that is, reinforcing the mesh folded over itself from the outside, or on the inside of the packaging (inside the mesh when it is folded, on the inside of the packaging). Preferably, the packaging has two reinforcement bands, one on each side (from the opening to the bottom of the packaging), improving the mechanical resistance of the entire packaging and preventing it from breaking in said areas when it is filled with food. The reinforcement band or bands can be sewn to the mesh by means of a single seam or by means of two or more seam lines, such that in this second case the mechanical resistance of the packaging is improved when it contains heavy products thanks to the reinforcement of the band and of the additional seams. The seams can be on the outside or inside of the packaging.

The packaging can also be provided at the opening thereof with closing or self-closing means, such as a textile strap or plant fibre cord, gathered or sewn in the mesh opening or mouth and allowing it to be closed by pulling on the strap or cord.

The size of the packaging should not be considered to be limiting of the invention, although preferably one of the sides of the packaging formed by the plant fibre mesh folded over itself has a length comprised between 200 and 240 mm, while the other side has a length comprised between 100 and 200 mm, where any combination of the two lengths (240x100 mm; 240x200 mm; 200x100 mm; 200x200 mm, etc.) is herein covered.

Another object of the present invention relates to a method for manufacturing the biodegradable packaging described above, in any of its variants, characterised in that it comprises at least the steps of:
- treating the food container body, which is the natural plant fibre mesh, by means of impregnation with starch, until forming a coating of the yarns of the fibre forming the mesh with said starch; and
- drying the mesh impregnated with the starch.

All the specifications described herein about the lining of the mesh with starch also herein apply to the method of obtainment thereof (type of starch, among other relevant points). Preferably, impregnation is carried out by means of one of the methods selected from the group composed of: spraying, bath or by means of transfer rollers. Also preferably, the drying is carried out at a temperature comprised between 60 and 120 °C, preferably 95 °C, applied to the material by means of, for example, direct steam-heated cylinders.

Preferably, the method of manufacturing the packaging comprises, prior to the starch impregnation step, a dyeing phase comprising the following steps:
- washing the natural plant fibre mesh (for example in a machine) with soap and water, at a temperature comprised between 80 °C and 100 °C (preferably at 90 °C), for a time comprised between 30 minutes and 90 minutes (preferably 1 hour);
- removing the wash water;
- immersing the mesh in water again and adding a dye or colouring, at a temperature comprised between 80 °C and 100 °C (preferably at 90 °C) and keeping the mixture for a time comprised between 30 minutes and 90 minutes (preferably 1 hour) under constant stirring, until obtaining a homogeneous dyeing of the mesh;
- removing the liquid part (water) and immersing the mesh again in warm water (that is, at a temperature comprised between 15 °C and 45 °C, and preferably between 20 °C and 45 °C) and soap for a time comprised between 15 minutes and 45 minutes (preferably for 30 minutes); and
- drying the dyed mesh.

Preferably, this last step comprises drying the mesh at a temperature comprised between 60 °C and 90 °C, preferably at 75 °C, and preferably in a roller drying machine with a continuous air flow at the indicated temperature.

In any case, the soap used can preferably be a liquid-type soap, and more preferably of the type of soap in which the fatty acids thereof come from vegetable oils extracted from soybean, corn, linen, etc. Preferably, the mesh is dyed in soaking basins or vats, although the process can be accelerated using industrial washing machines.

Finally, when the mesh is dyed and completely dry, it is removed (or taken out of the drying machine) and stored on reels for subsequent storage and use in making the packaging.

Any type of dye or colouring, in any colour, suitable for natural plant fibre materials of this type, can be used in the dyeing. However, the dye is preferably a natural or ecological and environmentally friendly dye, for example, all those dyes holding ecological certificates such as REACH®, AZO INK® and/or OEKOTEX®. The packaging object of protection thereby retains its ecological character.

The process of making the packaging is characterised by comprising a first step of sewing the natural plant fibre (preferably jute) followed, in those embodiments in which the packaging is reinforced with bands, by a second step of sewing the reinforcement band or bands to the mesh by means of a single seam or by means of two or more seam lines.

### Figures

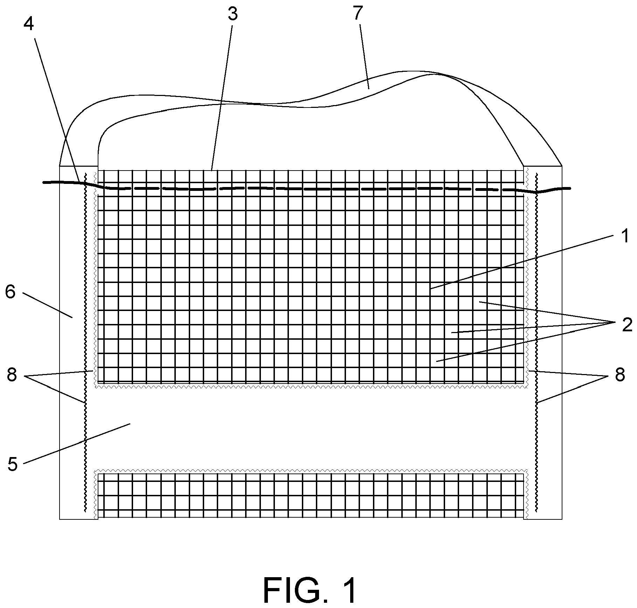

Figure 1. Biodegradable packaging for food according to the present invention, where:
   1 - Container body of the packaging made from plant fibre mesh folded over itself.
   2 - Quadrilaterals or holes in the mesh.
   3 - Opening of the packaging.
   4 - Closing means of the opening (3), which is a plant fibre cord.
   5 - Textile band sewn to the surface of the mesh (1) to include legends.
   6 - Textile band sewn on the outer perimeter of the container body formed by the mesh (1), to provide reinforcement and consistency.
   7 - Handle of the packaging.
Figure 2. Detail of the quadrilaterals or holes formed by the plant fibre mesh (1) of Figure 1, using a measuring device to show its size.
Figure 3. Detail of an embodiment of the biodegradable packaging for food according to the present invention, with a length device to show the size of the quadrilateral or hole, where:
   1 - Container body of the packaging made from plant fibre mesh folded over itself.
   2 - Quadrilaterals or holes in the mesh.
   3 - Opening of the packaging.
   4 - Closing means of the opening (3), which is a textile fibre.
   6 - Textile band sewn on the outer perimeter of the container body formed by the mesh (1), to provide reinforcement and consistency to the packaging.
   7 - Handle of the packaging.

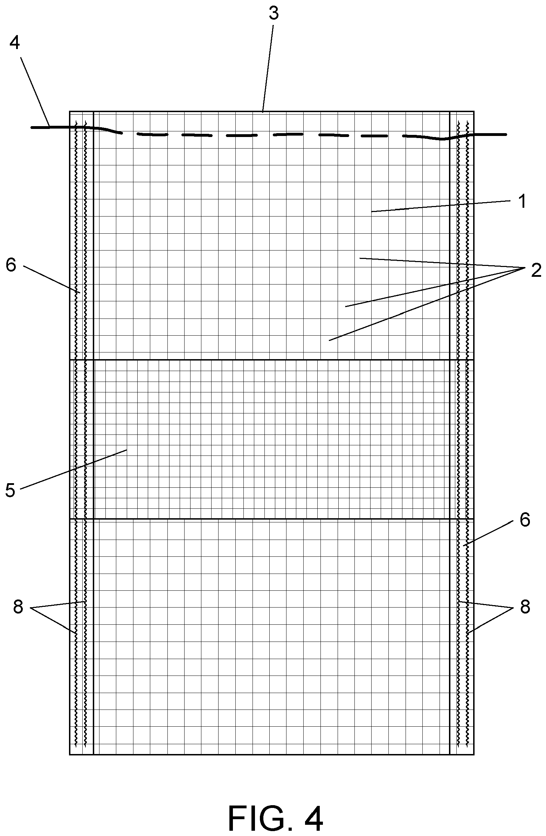

Figure 4. Particular embodiment of the biodegradable packaging for food according to the invention with reinforcement textile bands located inside the packaging, one each of its sides. As shown in the figure, the packaging of said particular embodiment consists of a combination of meshes with orifices of different sizes. In addition to the references described above, this figure shows a new reference corresponding to:
   8 - Double stitching of the textile band (6).

### Example of a preferred embodiment

In a preferred embodiment of the invention, said invention relates to a biodegradable packaging for food such as the one shown in Figure 1, having a food container body (1) made from a sheet that closes on itself, creating an inner compartment and an opening (3) in the manner of a bag, said sheet being made from natural plant fibre mesh (netting) made from jute yarn, lined with corn starch, said mesh having quadrilaterals (2) or holes of a size of 10 mm x 10 mm, with a tolerance index of 2 %-3 %. This size allows good mechanical resistance of the mesh to be achieved without sacrificing being able to see the product inside it.

The mesh is formed by a cloth made of braided, non-laminated jute yarn, with a width of 80 cm, a basis weight comprised between 97 and 105 gsm, to form the lattice or grid pattern acting as a container body (1), said mesh being treated by corn starch impregnation and subsequent drying, which reduces the malleability of jute, making it more rigid. A solution of 100 % natural corn powder in water at 2 %-12 % is used as the coating starch.

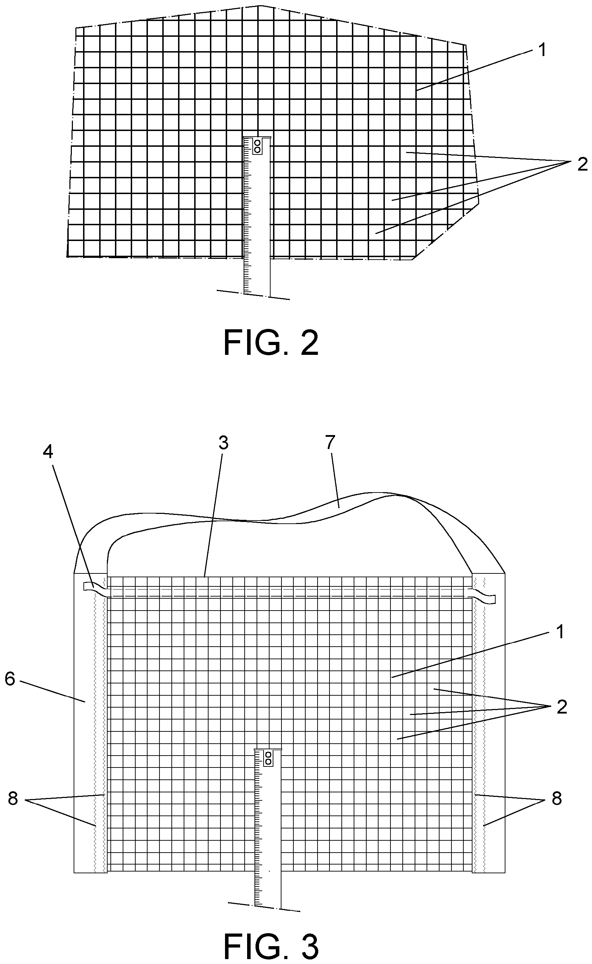

This biodegradable packaging for food is provided at the opening thereof (3) with closing or self-closing means (4), such as a plant fibre cord (see the embodiment in Figure 1) or a textile strap (see the embodiment in Figure 3), gathered in the mesh around said opening (3) or mouth and allowing it to be closed by pulling on the strap or cord.

Furthermore, the packaging comprises a textile band (5), which is adhered to the outer surface of the mesh, to include legends trademarks or indications on the product contained therein. This textile band (5) is sewn to the mesh. The packaging also comprises a second textile band (6) located on the perimeter of the container body (1), that is, surrounding the entire mesh which folds over itself, acting as a closure and reinforcement of the bag that is formed when the mesh is folded, also improving the appearance and consistency of the packaging. This band (6) may have such an extension that it protrudes from the container body of the packaging forming the mesh to form a handle (7) of the packaging and may be sewn to the mesh by means of a single seam or two seam lines (as shown in Figure 4).

## Claims

1. A biodegradable packaging for food, having a food container body made from a sheet that closes on itself, creating an inner compartment and an opening in the manner of a bag, said sheet being made from natural plant fibre mesh, lined and coated with starch, selected from a group consisting of cotton, linen, hemp and jute, as well as any of the combinations thereof, and wherein said mesh has holes of a size comprised between 2 mm and 15 mm.

2. The biodegradable packaging according to the preceding claim, wherein the holes of the mesh have a size comprised between 5 mm and 15 mm.

3. The biodegradable packaging according to claim 1 or 2, wherein the holes of the mesh have a tolerance index of 1 %-5 %.

4. The biodegradable packaging according to any one of claims 1 to 3, wherein the holes have a shape selected from the group of geometries consisting of a quadrilateral, rectangle, rhombus and circle.

5. The biodegradable packaging according to claim 4, wherein the holes have a quadrilateral shape and wherein the size of the holes is 7 mm x 7 mm or 10 mm x 10 mm.

6. The biodegradable packaging according to any one of the preceding claims, wherein the starch lining the mesh is corn starch.

7. The biodegradable packaging according to any one of the preceding claims, wherein the starch lining the mesh is a solution of 100% natural corn powder diluted in water at a concentration comprised between 2 % and 12 %.

8. The biodegradable packaging according to any one of the preceding claims, wherein the mesh is formed by a natural plant fibre yarn which is braided, knotted or adhered.

9. The biodegradable packaging according to any one of the preceding claims, wherein the natural plant fibre mesh is jute yarn.

10. The biodegradable packaging according to any one of the preceding claims, wherein the mesh is composed of a horizontal yarn with respect to the length of the packaging braided with two yarns perpendicular to the horizontal yarn, said two yarns being vertical with respect to the width of the packaging, forming a lattice or netting with holes homogeneously distributed in the mesh, or else the mesh is composed of a single horizontal yarn braided with a single yarn perpendicular and vertical with respect to said horizontal yarn, forming said lattice.

11. The biodegradable packaging according to any one of the preceding claims, wherein the mesh is dyed or coloured with a natural dye or a dye suitable for contact with food.

12. The biodegradable packaging according to the preceding claim, wherein the yarn is non-laminated jute yarn with a width of between 60 cm and 120 cm.

13. The biodegradable packaging according to the preceding claim, wherein the width is 80 cm.

14. The biodegradable packaging according to any one of claims 9 to 13, wherein the jute yarn has a basis weight comprised between 80 and 300 gsm.

15. The biodegradable packaging according to any one of the preceding claims, comprising at least one textile or non-woven material band, which is adhered to the outer surface of the mesh, to include legends, trademarks or indications on the product contained therein.

16. The biodegradable packaging according to any one of the preceding claims, comprising one or more textile or non-woven material bands located on the perimeter of the container body formed by the mesh which folds over itself, in the manner of reinforcement, on the outside of the mesh or on the inside of the mesh, and sewn by means of at least one seam.

17. The biodegradable packaging according to any one of the preceding claims, comprising closing means at the opening thereof, gathered or sewn at said opening of the mesh and allowing it to be closed.

18. A method for manufacturing the biodegradable packaging described in any one of claims 1 to 17, **characterised in that** it comprises at least the steps of:
- treating the food container body which is the natural plant fibre mesh, by means of impregnation with starch, until forming a coating of the yarns of the fibre forming the mesh with said starch; and
- drying the mesh impregnated with the starch.

19. The method described in claim 18, comprising, prior to the starch impregnation step, a dyeing phase in turn comprising the following steps:
- washing the natural plant fibre mesh with soap and water, at a temperature comprised between 80 °C and 100 °C, for a time comprised between 30 minutes and 90 minutes;
- removing the wash water;
- immersing the mesh in water again and adding a dye or colouring, at a temperature comprised between 80 °C and 100 °C and keeping the mixture under constant stirring for a time comprised between 30 minutes and 90 minutes, until obtaining a homogeneous dyeing of the mesh;
- removing the water and immersing the mesh again in warm water, at a temperature comprised between 15 °C and 45 °C, and soap for a time comprised between 15 minutes and 45 minutes; and
- drying the dyed mesh.
